# EUROPÄISCHE PATENTSCHRIFT

(11) **EP 4 284 584 B1**
(45) Veröffentlichungstag und Bekanntmachung des Hinweises auf die Patenterteilung: **13.08.2025**
(21) Anmeldenummer: 22701250.7
(22) Anmeldetag: 20.01.2022
(51) Int. Cl.: B23F 19/05, B23F 21/00, B23F 21/03

(54) **VERFAHREN DES HONENS EINER VERZAHNUNG AN EINEM WERKSTÜCK**
METHOD FOR HONING A TOOTHING ON A WORKPIECE
PROCÉDÉ DE RODAGE D'UNE DENTURE SUR UNE PIÈCE

(30) Priorität: 28.01.2021 DE 102021000429
(43) Veröffentlichungstag der Anmeldung: 06.12.2023
(73) Patentinhaber: Gleason Switzerland AG, 2557 Studen (CH)
(72) Erfinder: RIEDERER, Silvan, 8408 Winterthur (CH); BROGNI, Johannes, 3293 Dotzigen (CH)
(74) Vertreter: Leinweber & Zimmermann
(86) Internationale Anmeldenummer: PCT/EP2022/051257
(87) Internationale Veröffentlichungsnummer: WO 2022/161852

(56) Entgegenhaltungen:
- WO-A1-2015/198670
- DE-A1- 2 060 579
- US-A1- 2018 111 209
- US-A1- 2019 321 901

## Beschreibung

Die Erfindung betrifft das Gebiet der Hartfeinbearbeitung von Verzahnungen mit geometrisch unbestimmter Schneide, insbesondere ein Verfahren des Honens einer Verzahnung an einem Werkstück mit einem verzahnten Honwerkzeug, insbesondere in Form eines innenverzahnten Honrings.

Derartige Verfahren sind in der Verzahnungstechnologie gut bekannt, und beispielsweise auch im Fachbuch "Innovative Zahnradfertigung", Thomas Bausch, 3. Auflage, Expertverlag, beschrieben. So erkennt man darin auf Seite 592 die typische Konstellation des Verzahnungshonens mit einem innenverzahnten Honring, dessen Drehachse unter einem Achskreuzwinkel zur Werkstückdrehachse verläuft.

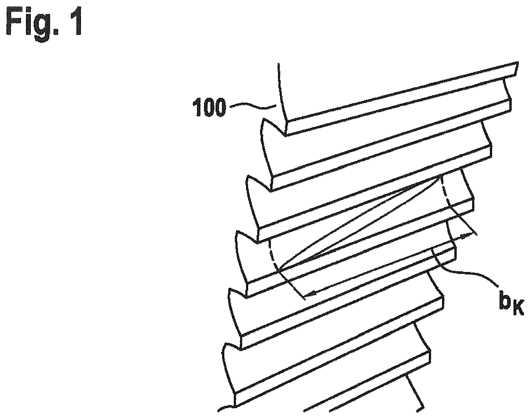

Das Werkstück befindet sich dabei über seine volle Verzahnungsbreite im Bearbeitungseingriff mit dem Honring 100, der in Fig. 1 der gegenständlichen Anmeldung graphisch als linsenförmiger Kontaktbereich mit bezüglich der Werkzeugdrehachse axialer Kontaktbreite b_{K} dargestellt ist.

Beim Honen wird der Achsabstand von Honwerkzeug und Werkstückverzahnung durch Eintauchen des Werkzeugs in die Werkstückverzahnung bis auf Endzustelltiefe verringert. Diesem reinen Tauchhonen kann auch noch eine oszillierende Axialbewegung überlagert werden (Längshonen), wodurch sich nochmals höhere Oberflächengüten erzeugen lassen.

DE 2 060 579 offenbart ein zahnradartiges Walzwerkzeug zum spanlosen Feinbearbeiten vorverzahnter Zahnflanken. Zur Einleitung des Vorgangs der spanlosen Umformung muss der Werkstoff des Werkstücks zum Fließen gebracht werden und hierzu eine erforderliche Flächenpressung realisiert werden.

US 2019/0321901 A1 offenbart ein Verfahren zur Hartfeinbearbeitung, bei dem die Abtragleistung nicht von einer Zahnkante an einer Stirnseite des Werkzeugs getragen wird, sondern sich über die Länge einer Rampe verteilt, so dass ein in Axialrichtung des Werkzeugs gesehen größerer Bereich an der Abtragleistung teilhat.

Der Erfindung liegt die Aufgabe zugrunde, ein Verfahren der eingangs genannten Art in einer Weise weiterzubilden, die eine zufriedenstellende Oberflächenqualität der Zahnflanken mit einer zufriedenstellend geringen Abweichung von der angestrebten Zielgeometrie auch bei hinsichtlich der Toleranzen der Vorverzahnung ungünstigen Ausgangsbedingungen kombiniert.

Diese Aufgabe wird von der Erfindung in verfahrenstechnischer Hinsicht gelöst durch ein Verfahren des Honens einer Verzahnung an einem Werkstück mit einem verzahnten Honwerkzeug in kämmendem Bearbeitungseingriff, insbesondere in Form eines innenverzahnten Honrings, bei dem bei gegebener Relativlage zwischen Werkstückverzahnung und Honwerkzeug die Kontaktzone des Bearbeitungseingriffs aufgrund einer Breitenballigkeit der Zahnflanken des Honwerkzeugs nur in einem um den Scheitel der Breitenballigkeit gelegenen Arbeitsbereich einer axialen Abmessung geringer als die im Bearbeitungseingriff zur Abdeckung der Verzahnungsbreite der Werkstückverzahnung erforderlichen Mindestbreite gebildet ist und der Arbeitsbereich zur vollständigen Bearbeitung der Werkstückverzahnung axial verschoben wird.

Aufgrund des im Vergleich zur bisherigen Technik deutlich schmaleren Arbeitsbereichs ändert sich abhängig von der bestehenden Umgreifung auch die gesamte Eingriffszone und dadurch die Spannungsverhältnisse im Bearbeitungseingriff, was sich insbesondere bei höheren Summenteilungsfehlern der Vorverzahnung günstig zu deren Beseitigung auswirkt. Hierfür wird der Nachteil in Kauf genommen, dass sich der Bearbeitungseingriff nicht mehr über die gesamte Zahnbreite erstreckt und zur Kompensation die axiale Verschiebebewegung durchgeführt wird.

Die positive (konvexe) Balligkeit kann in einer nicht weiter beschränkten Form gestaltet sein, etwa parabolisch, bogenförmig oder elliptisch. Es können jedoch auch sinusartige Erhebungen oder ggf. abgerundete Stufen zum Einsatz kommen. Der "Scheitel" der Breitenballigkeit ist demnach breit zu verstehen und meint die Stelle/ggf. den ausgedehnten Bereich größter Zahnbreitenerhöhung.

In einer bevorzugten Variante ist vorgesehen, dass die Breitenballigkeit der Zahnflanken des Honrings wenigstens 5 µm, bevorzugt wenigstens 10 µm, insbesondere wenigstens 15 µm beträgt und/oder die auf die Honwerkzeugbreite bezogene Breitenballigkeit wenigstens 0,0002, bevorzugt wenigstens 0,0006, insbesondere wenigstens 0,001 beträgt. Dies liefert bei typischen Honringen eine günstige Aufspaltung in Arbeitsbereich und nicht-arbeitende Stützbereiche, die der Stabilität des Werkzeugs und des Bearbeitungsvorgangs dienen.

In einer weiteren bevorzugten Gestaltung ist vorgesehen, dass die Verzahnungsbreite der Werkzeugverzahnung die axiale Abmessung des Arbeitsbereichs beidseits um jeweils wenigstens 20%, bevorzugt wenigstens 25%, insbesondere 30% und/oder wenigstens 1 mm, bevorzugt wenigstens 2 mm, insbesondere wenigstens 3 mm übersteigt und insbesondere gleich oder größer dieser Mindestbreite ist. Auf diese Weise gelingt eine zufriedenstellende stabilisierende seitliche Stützung des Arbeitsbereichs.

In einer weiteren bevorzugten Gestaltung ist vorgesehen, dass die axiale Verlagerung einer radialen Zustellung überlagert wird, und der Arbeitsbereich bis zu einer vorgegebenen radialen Zustelltiefe alleinig zum Einsatz kommt. Somit wird das Verfahren für eine erste Bearbeitung bis hin zu der vorgegebenen radialen Zustelltiefe ausgeführt. Hierbei wird wenigstens abschnittsweise ein Verhältnis aus axialer Verschiebung und radialer Zustellung in mm/µm von größer als 0,4, bevorzugt größer als 0,8, insbesondere größer als 1,2 und/oder geringer als 16, bevorzugt geringer als 12, insbesondere geringer als 8 vorgesehen. Diese Werte gelten für kontinuierliche Zustellung wie auch als zeitliches Mittel für diskontinuierliche Zustellung. Zudem ist die axiale Bewegungsgeschwindigkeit in mm/min bevorzugt geringer als 480, weiter bevorzugt geringer als 420, insbesondere geringer als 360.

In einer weiteren bevorzugten Verfahrensgestaltung ist vorgesehen, dass die vorgegebene radiale Zustelltiefe nicht mehr als 95%, bevorzugt nicht mehr als 90%, insbesondere nicht mehr als 80% von der radialen Endzustelltiefe X_{E} entfernt liegt, jedoch bevorzugt mehr als 20%, weiter bevorzugt mehr als 50%, insbesondere mehr als 70%, bezogen auf das Zustellintervall von beginnendem Materialabtrag bis hin zur Endzustelltiefe.

Dies sorgt einerseits für eine günstige Vorbehandlung eines ggf. in der bearbeiteten Vorverzahnung bestehenden Summenteilungsfehlers in Kombination mit einer noch verbleibenden Restzustelltiefe zum Erreichen der finalen Endgeometrie der Verzahnung.

In einer weiteren bevorzugten Gestaltung ist vorgesehen, dass die Honbearbeitung über die vorgegebene Zustelltiefe hinaus mit einem anderen Honwerkzeug fortgesetzt wird.

Der im Wege der erfindungsgemäßen Honbearbeitung ausgeführten ersten Bearbeitung kann somit bis zum Erreichen der Endgeometrie eine weitere Honbearbeitung folgen, die per se wie im bisherigen Stand der Technik mit einem Honwerkzeug durchgeführt ist, das für die vorgesehenen Prozessbedingungen auf die Endgeometrie der Werkstückverzahnung abgestimmt ist. Dieses zweite Werkzeug wird bevorzugt jedenfalls nicht mehr die starke Balligkeit wie das erste Werkzeug aufweisen.

In einer weiteren bevorzugten Gestaltung ist diesbezüglich vorgesehen, dass das andere Honwerkzeug und das Honwerkzeug der ersten Honbearbeitung in einer gemeinsamen Aufspannung aufgespannt sind.

Auf diese Weise wird trotz Werkzeugwechsel nur eine geringe zusätzliche Zeit die Gesamtbearbeitungszeit verlängern, das im Wesentlichen nur durch das radiale Aus- und wieder Eintauchen sowie die geringe dazwischenliegende Axialverschiebung für den Werkzeugwechsel liegt.

In einer besonders bevorzugten Ausgestaltung ist vorgesehen, dass (trotz der zwei Honwerkzeuge) das Abrichten beider Honwerkzeuge mit dem gleichen, insbesondere demselben Abrichtwerkzeug erfolgt. Um dennoch den unterschiedlichen Profilierungen der beiden Werkzeuge Rechnung zu tragen, erfolgt das Abrichten für die jeweiligen Honwerkzeuge in unterschiedlichen Maschinenachskonfigurationen, insbesondere unter modifiziertem Einsatz der B-Achse der herangezogenen Honmaschine.

In einer bevorzugten Ausgestaltung ist vorgesehen, dass die Zahnflanken des anderen Honwerkzeugs hohlballig oder ohne Balligkeit gebildet sind.

Hierbei kommt wiederum vorteilhaft zum Tragen, dass hinsichtlich der zweiten Bearbeitung völlig im fachüblichen Bereich gearbeitet wird und somit keine zusätzlichen Implementierungsschwierigkeiten auftreten.

In einer alternativen Ausgestaltung ist vorgesehen, dass die Honbearbeitung über die vorgegebene Zustelltiefe hinaus weiterhin mit dem Honwerkzeug der vorhergehenden Honbearbeitung ausgeführt wird, jedoch unter zusätzlichen maschinenachserzeugten Kompensationsbewegungen zur Verbreiterung der Kontaktzone über die der vorhergehenden Bearbeitung hinaus.

Letztere (b_{K} der erfindungsgemäßen Kontaktzone nach Anspruch 1) übersteigt bevorzugt 6 mm nicht, weiter bevorzugt 4 mm nicht, insbesondere 3 mm nicht und kann sogar 2 mm oder geringer sein.

Diese Variante eignet sich primär für Konstellationen, in denen das Heranziehen eines zusätzlichen Honwerkzeugs aus Maschinenkonzeptgründen nur schwer möglich oder mit größeren Einbußen in der Bearbeitungsgeschwindigkeit (Hauptzeit) möglich ist.

Des Weiteren ist von der Erfindung in vorrichtungstechnischer Hinsicht vorgesehen ein Steuerprogramm mit Steueranweisungen, die, wenn auf einer Steuerung einer Honmaschine ausgeführt, die Maschine zur Ausführung eines Verfahrens nach einem der vorgenannten Aspekte ausführen lässt.

Des Weiteren ist vorrichtungstechnisch eine Honmaschine bereitgestellt, die eine drehend antreibbare Werkstückaufnahme sowie eine drehend antreibbare Werkzeugaufnahme zur Aufnahme wenigstens eines Honwerkzeugs aufweist, sowie eine Steuerung, die über ein Steuerprogramm mit diesen Eigenschaften verfügt.

In einer bevorzugten Gestaltung weist die Honmaschine neben einer linearen Maschinenachse zur axialen Änderung der Relativlage zwischen Werkstück und Werkzeug und einer linearen Maschinenachse zur Änderung der radialen Relativlage von Werkstück und Werkzeug sowie einer rotatorischen Maschinenachse zur Einstellung des Achskreuzwinkels des Honverfahrens noch eine weitere Positionierachse auf.

Bevorzugt könnte es sich dabei zum einen um eine lineare Maschinenachse handeln, die gegenüber Axial- und Radialachse eine dritte Dimension erschließt. Ebenfalls bevorzugt ist dafür eine zusätzliche rotatorische Achse (B-Achse) vorgesehen, mit der der Werkzeugkopf mit der Werkzeugaufnahme um eine quer zur Axial- sowie quer zur RadialAchse, insbesondere orthogonal zu diesen Achsen liegende Achse verschwenkbar ist.

In einer weiteren bevorzugten Gestaltung der Honmaschine ist vorgesehen, dass die Werkzeughalterung zwei unterschiedlich profilierte Honringe aufnimmt, oder einen Honring mit unterschiedlich profilierten axialen Bereichen, zur Durchführung des Verfahrens mit der vorangehenden Honbearbeitung durch das breitenballige Honwerkzeug und einer nachfolgenden Honbearbeitung durch das weitere Honwerkzeug.

Weitere Merkmale, Einzelheiten und Vorteile der Erfindung ergeben sich aus der nachfolgenden Beschreibung mit Bezug auf die beigefügten Figuren, von denen
Fig. 1 eine schematische Darstellung einer Kontaktzone auf einer Zahnflanke eines innenverzahnten Honrings wie im Stand der Technik üblich zeigt,
Fig. 2 in schematischer Darstellung eine durch Werkzeugbreitenballigkeit hervorgerufene Kontaktzone zeigt,
Fig. 3 eine Überlagerung der Figuren 1 und 2 zeigt,
Fig. 4 eine schematische Darstellung überlagerter Bewegungen ist,
Fig. 5 eine Werkzeugaufnahme mit zwei Honringen zeigt,
Fig. 6 eine Honmaschine für das Verzahnungshonen zeigt, und
Fig. 7 eine Darstellung eines verringerten Summenteilungsfehlers ist.

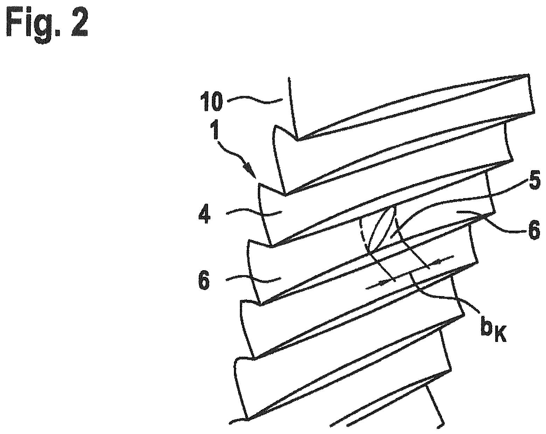

Wie aus Fig. 2, wenn auch zeichnerisch stark übertrieben dargestellt, erkennbar ist, sind die Zahnflanken 4 eines innenverzahnten Honrings 10 stark breitenballig ausgebildet. Dies hat zur Folge, dass sich bei der Verzahnungshonbearbeitung ein Kontakt nur in einem Bereich 5 nahe und zentriert um den Scheitel der Breitenballigkeit ausbildet. Die außerhalb dieses Bereichs 5 angeordneten axialen Bereiche 6 (Stützbereiche) der Honringverzahnung 1 mit aufgrund der Breitenballigkeit gegenüber dem Scheitelbereich 5 verringerten Zahndicke kommen nicht mehr in abtragenden Eingriff.

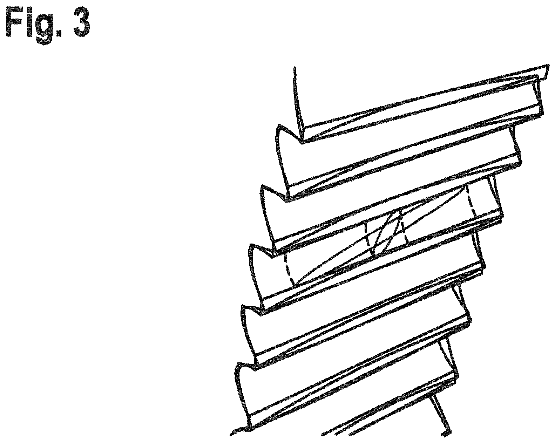

Die Eingriffszone ist demnach aufgrund ihrer geringeren Axialabmessung b_{K} deutlich geringer (siehe die Überlagerungsdarstellung von Fig. 3) als beim herkömmlichen Verzahnungshonen, dies hat zum einen zur Folge, dass (da sich beim Verzahnungshonen üblicherweise mehrere Zähne/Zahnlücken im Eingriff befinden, obgleich in Fig. 2 die Kontaktzone nur an einer Zahnflanke dargestellt ist) der gesamte Eingriffsbereich spürbar verringert ist. Dies wirkt sich positiv auf die Druckspannungen des Bearbeitungseingriffs aus, so dass das Verfahren mit stark breitenballig modifiziertem Honwerkzeug weniger anfällig insbesondere gegenüber größeren Summenteilungsfehlern der Vorverzahnung ist.

Zum anderen wird aufgrund der geringeren axialen Ausdehnung b_{K} der Kontaktzone das Werkstück in der in Fig. 2 gezeigten Konfiguration (unter Annahme einer Verzahnungsbreite der Werkstückverzahnung passend zu Fig. 1) nicht mehr über die volle Verzahnungsbreite bearbeitet. Diesem Umstand wird dadurch begegnet, dass Werkstück und Honwerkzeug eine deren axiale Relativlage ändernden oszillierenden Axialbewegung unterzogen werden, deren Amplitude so groß ist, dass die axial wandernde Kontaktzone die volle Verzahnungsbreite der Werkstückverzahnung überstreicht.

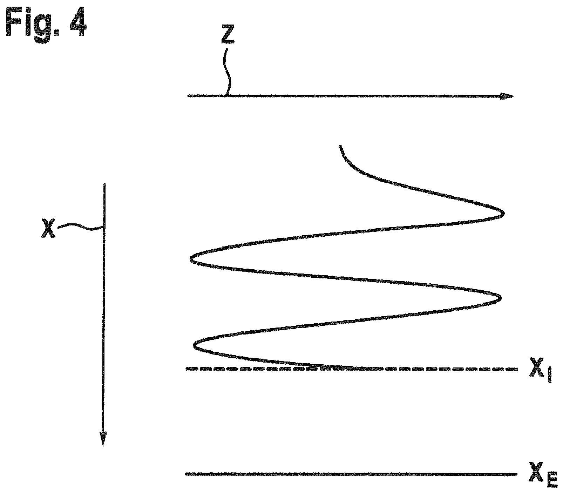

Diese axiale (Z) Oszillationsbewegung ist der radialen (X) Tauchbewegung überlagert, ein Beispiel für diese überlagerte Bewegung ist rein schematisch in Fig. 4 dargestellt. Man erkennt bei dieser schematisch beispielhaften Gestaltung, dass sich zu Beginn der Bearbeitung die Werkstückverzahnung und der Honring in einer relativen Lage zueinander befinden, in der herkömmlich gehont wird, d.h. mit im Wesentlichen übereinanderliegenden Mitten der jeweiligen Verzahnungsbreiten. In dieser Axiallage bearbeitet wurde jedoch nur innerhalb der aufgrund der Breitenballigkeit des Honrings verringerten Kontaktbreite b_{K}. Durch die überlagerte axiale Oszillation verlagert sich die Kontaktzone hin zur einen und dann zur anderen Stirnseite der Werkstückverzahnung.

Das in Fig. 4 untere Ende der oszillierenden Bewegung ist jedoch nicht bei der radialen Endzustellung X_{E} der Honbearbeitung der Werkstückverzahnung. Vielmehr wird mit dem bislang beschriebenen Verfahren nur innerhalb, d.h. bis zu einer vorgegebenen radialen Zustelltiefe X_{I} gearbeitet. Es versteht sich, dass Details des Ablaufs der Verlagerungsbewegung des Kontaktbereichs variiert werden können. Für die verbleibende Bearbeitung bis hin zur Endzustelltiefe kommt dagegen ein unterschiedlich profiliertes Honwerkzeug zum Einsatz, beispielsweise die in Fig. 1 gezeigte herkömmliche Honringverzahnung, welche auf die zu erzeugende Endgeometrie der zu honenden Verzahnung abgestimmt ist. Das heißt, in dieser zweiten Honbearbeitung kann ein Honen völlig in Übereinstimmung mit herkömmlichem Verzahnungshonen stattfinden, etwa im reinen Tauchverfahren oder Längshonen.

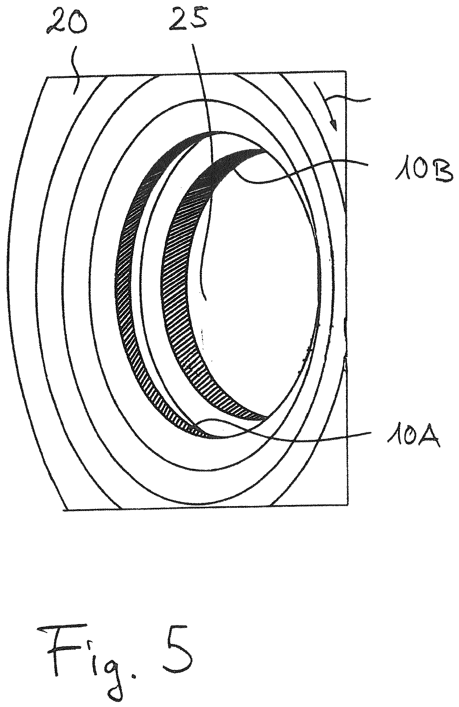

Hierzu kann, wie in Fig. 5 dargestellt ist, der breitenballig modifizierte Honring 10A der ersten Honbearbeitung und ein auf die Endgeometrie der zu honenden Verzahnung abgestimmter Honring 10B der zweiten Honbearbeitung in einer gemeinsamen Aufspannung angeordnet sein (die in der Bilddarstellung dargestellten unterschiedlichen Schrägungswinkel sind unbeachtlich). Für den Wechsel von der ersten zur zweiten Honbearbeitung bedarf es demnach nur einer zwischenzeitlichen axialen Verschiebung zwischen Werkstück und dem gemeinsamen Honringhalter 20. Der Innenraum 25 ist demnach breit genug zur Aufnahme beider Honringe 10A, 10B gestaltet. Es versteht sich, dass die Erfindung jedoch nicht auf das Heranziehen eines gemeinsamen Honringhalters eingeschränkt ist.

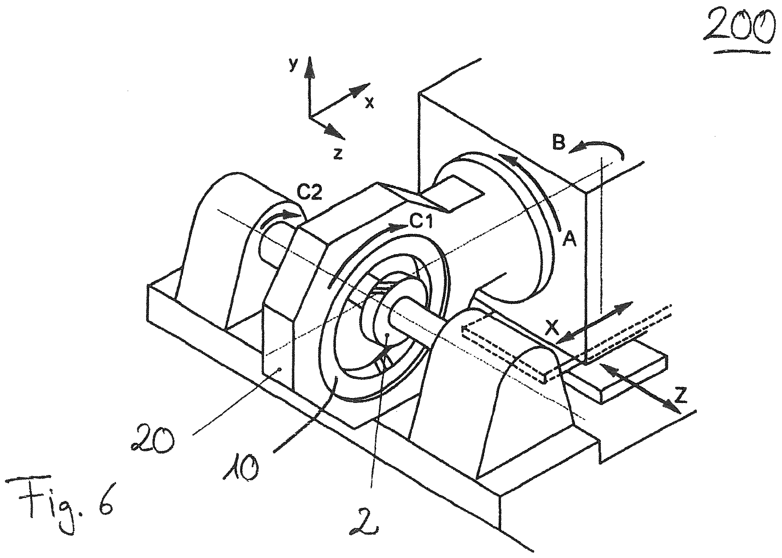

In Fig. 6 ist eine Honmaschine 200 dargestellt, auf der das Verfahren ausgeführt werden könnte, und deren Steuerung dementsprechend mit einem Steuerprogramm versehen ist, das die Maschine 200 das Verfahren ausführen lässt.

In Fig. 6 eingezeichnet sind auch die Bewegungsachsen der Maschine. Die X-Achse verfährt den Honkopf 20 mit dem Honring 10 darin radial zum Werkstück 2. Die Z-Achse verfährt den Honkopf 2 axial zum Werkstück 2. Sie kann zum einen für das herkömmliche axiale Pendeln beim Längshonen herangezogen werden, und legt bei dem erfindungsgemäßen Verfahren größere Verfahrbereiche zurück, um den Arbeitsbereich 5 über die volle Verzahnungsbreite des Werkstücks 2 zu führen. Die C1-Achse ist die Drehachse des Hauptspindelantriebs, der den Honring 10 in rotatorische Bewegung versetzt. In einer möglichen Ausgestaltung befindet sich der Hauptspindelantrieb im Honkopf 20. Die C2-Achse ist der Spindelantrieb zum rotatorischen Antrieb des Werkstücks 2, die für den Bearbeitungseingriff passend zur C1-Achse synchronisiert ist.

Die A-Achse verdreht den Honkopf 20 mit dem Honring 10 senkrecht zu seiner Drehachse zur Einstellung des Achskreuzwinkels 6. Die B-Achse verdreht den Honringkopf 20 mit dem Honring 10 ebenfalls vertikal zu seiner Drehachse (Drehung mit Y als Drehachse). Die B-Achse kann zum Einstellen von Balligkeiten auf der Werkstückzahnflanke oder anderen Flankenkorrekturbewegungen herangezogen werden. Sie kann auch dazu herangezogen werden, bei einem Honkopf mit Honringen 100, 10 gemäß Fig. 5 das Abrichten dieser Honringe mit dem gleichen Abrichtwerkzeug zu realisieren, indem beim Abrichten des Honrings 10 die gewünschte starke Balligkeit des Honrings 10 über die B-Achse berücksichtigt ist. Es versteht sich jedoch, dass die Erfindung nicht auf in Fig. 6 gezeigte Realisierung einer Honmaschine eingeschränkt ist, sondern auch andere bekannte Maschinenkonzepte mit z.B. drei Linearachsen herangezogen werden können.

Da bei dem erfindungsgemäßen Verfahren der Arbeitsbereich 5 geringer axialer Ausdehnung pendelt, ist eine am Werkstück gewünschte Balligkeit nicht mehr über die Honring-Gestaltung in das Werkstück einbringbar, eine Breitenballigkeit am Werkstück kann jedoch über die dynamische B-Achse (Fig. 6) in das Werkstück eingetragen werden.

Grundsätzlich wäre es auch denkbar, den zweiten Teil der Honbearbeitung mit Zustellung bis auf Endzustelltiefe noch mit dem breitenballig modifizierten Honring gemäß Fig. 2 auszuführen. Hierzu würde die Breitenballigkeit der Honringverzahnung durch maschinenachsseitige Kompensationsbewegungen ausgeglichen werden, in gleicher Weise wie üblicherweise Breitenballigkeitsmodifikationen maschinenachsseitig in Werkstücke eingearbeitet werden können. Hierzu kann die B-Achse gemäß Fig. 6 zum Einsatz kommen.

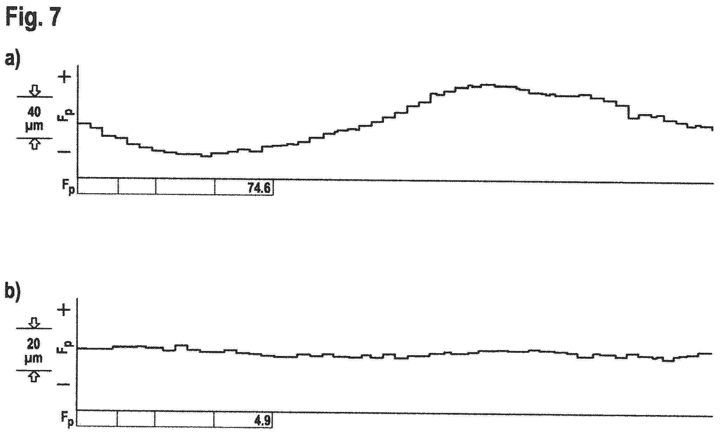

In Fig. 7 ist noch dargestellt, wie sich das erfindungsgemäße Verfahren vorteilhaft auf eine Reduzierung von Verzahnungsfehlern der Vorverzahnung auswirkt. So ist in Fig. 7a die Messung des Summenteilungsfehlers Fp an der dem Honen übergebenen Vorverzahnung abgebildet, mit Fp von 74 µm. Der Summenteilungsfehler wurde nach dem Honen erneut bestimmt und ist gemäß Fig. 7b auf 4,9 µm verringert. Mit dem erfindungsgemäßen Verfahren können somit auch Werkstücke mit vergleichsweise hohen Summenteilungsfehlern der Vorverzahnung noch gehont werden, welche ansonsten üblicherweise als dem Honprozess nicht mehr zugänglich angesehen werden. Dies erleichtert den Gesamtprozess, da auch im Falle von Abweichungen von gewünschten Toleranzen der Vorbearbeitung bzw. des Härtens der Werkstücke noch im Honen verbessert nachkorrigiert werden können (üblicherweise wird im Stand der Technik davon ausgegangen, dass sich ein Summenteilungsfehler durch das Honen bestenfalls noch etwa halbieren ließe).

Aus Fig. 7 ist ersichtlich, dass der Summenteilungsfehler um mehr als 60%, sogar mehr als 70%, sogar mehr als 80% reduzieren lässt, in dem gezeigten Beispiel waren sogar 90% Fp Reduktion möglich (die nicht bildlich gezeigte Messung der anderen Zahnflanke ergab eine Reduktion von 76 µm auf 6,8 µm.

## Patentansprüche

1. Verfahren des Honens einer Verzahnung an einem Werkstück (2) mit einem verzahnten Honwerkzeug (10) in kämmendem Bearbeitungseingriff, insbesondere in Form eines innenverzahnten Honrings (10), **dadurch gekennzeichnet, dass** bei gegebener Relativlage zwischen Werkstückverzahnung und Honwerkzeug die Kontaktzone des Bearbeitungseingriffs aufgrund einer Breitenballigkeit der Zahnflanken des Honwerkzeugs nur in einem um den Scheitel der Breitenballigkeit gelegenen Arbeitsbereich einer axialen Abmessung (b_{K}) geringer als die im Bearbeitungseingriff zur Abdeckung der Verzahnungsbreite der Werkstückverzahnung erforderlichen Mindestbreite gebildet ist und der Arbeitsbereich zur vollständigen Bearbeitung der Werkstückverzahnung axial verschoben wird.

2. Verfahren nach Anspruch 1, bei dem die Breitenballigkeit der Zahnflanken des Honrings wenigstens 5 µm, bevorzugt wenigstens 10 µm, insbesondere wenigstens 15 µm beträgt und/oder die auf die Honwerkzeugbreite bezogene Breitenballigkeit wenigstens 0,0002, bevorzugt wenigstens 0,0006, insbesondere wenigstens 0,001 beträgt.

3. Verfahren nach Anspruch 1 oder 2, bei dem die Verzahnungsbreite der Werkzeugverzahnung die axiale Abmessung des Arbeitsbereichs insbesondere beidseits um jeweils wenigstens 20%, bevorzugt wenigstens 25%, insbesondere 30% und/oder wenigstens 1 mm, bevorzugt wenigstens 2 mm, insbesondere wenigstens 3 mm übersteigt.

4. Verfahren nach einem der Ansprüche 1 bis 3, bei dem die axiale (Z) Verlagerung einer radialen (X) Zustellung überlagert wird, und der Arbeitsbereich bis zu einer vorgegebenen radialen Zustelltiefe (X_{I}) alleinig zum Einsatz kommt.

5. Verfahren nach einem der Ansprüche 1 bis 4, bei dem die vorgegebene radiale Zustelltiefe nicht mehr als 95%, bevorzugt nicht mehr als 90%, insbesondere nicht mehr als 80% von der radialen Endzustelltiefe (X_{E}) entfernt liegt, jedoch bevorzugt mehr als 20%, weiter bevorzugt mehr als 30%, insbesondere mehr als 70%, bezogen auf das Zustellintervall von beginnendem Materialabtrag bis hin zur Endzustelltiefe.

6. Verfahren nach Anspruch 4 oder 5, bei dem die Honbearbeitung über die vorgegebene Zustelltiefe hinaus mit einem anderen Honwerkzeug fortgesetzt wird.

7. Verfahren nach Anspruch 6, bei dem das andere Honwerkzeug (10B) und das Honwerkzeug (10A) der ersten Honbearbeitung in einer gemeinsamen Aufspannung (20) aufgespannt sind.

8. Verfahren nach Anspruch 7, bei dem ein Abrichten der beiden Honwerkzeuge mit dem gleichen, insbesondere demselben Abrichtwerkzeug erfolgt.

9. Verfahren nach Anspruch 8, bei dem die Zahnflanken des anderen Honwerkzeugs hohlballig oder ohne Balligkeit gebildet sind.

10. Verfahren nach Anspruch 9, bei dem die Honbearbeitung über die vorgegebene Zustelltiefe hinaus weiterhin mit dem Honwerkzeug der vorhergehenden Honbearbeitung ausgeführt wird, jedoch unter zusätzlichen maschinenachserzeugten Kompensationsbewegungen zur Verbreiterung der Kontaktzone über die der vorhergehenden Bearbeitung hinaus.

11. Steuerprogramm mit Steueranweisungen, **dadurch gekennzeichnet, dass** die Steueranweisungen, wenn auf einer Steuerung einer Honmaschine ausgeführt, die Maschine zur Ausführung eines Verfahrens nach einem der Ansprüche 1 bis 10 ausführen lässt.

12. Honmaschine (200), die eine drehend antreibbare Werkstückaufnahme sowie eine drehend antreibbare Werkzeugaufnahme (20) zur Aufnahme eines Honwerkzeugs aufweist, sowie eine Steuerung, **dadurch gekennzeichnet, dass** die Steuerung über ein Steuerprogramm gemäß Anspruch 11 verfügt.

13. Honmaschine gemäß Anspruch 12, die neben einer linearen Maschinenachse (Z) zur axialen Änderung der Relativlage zwischen Werkstück und Werkzeug und einer linearen Maschinenachse (X) zur Änderung der radialen Relativlage von Werkstück und Werkzeug sowie einer rotatorischen Maschinenachse (A) zur Einstellung des Achskreuzwinkels des Honverfahrens noch eine weitere Positionierachse aufweist.

14. Honmaschine gemäß Anspruch 12 oder 13, bei der die Werkzeughalterung zwei unterschiedlich profilierte Honringe aufnimmt, oder einen Honring mit unterschiedlich profilierten axialen Bereichen, zur Durchführung des Verfahrens mit der vorangehenden Honbearbeitung durch das breitenballige Honwerkzeug/profilierter Bereich und einer nachfolgenden Honbearbeitung durch das weitere Honwerkzeug/weniger breitenballig profilierter Bereich.

## Claims

1. A method of honing a toothing on a workpiece (2) with a toothed honing tool (10) in meshing machining engagement, in particular in the form of an internally toothed honing ring (10), **characterized in that**, for a given relative position between the workpiece toothing and the honing tool, the contact area of the machining engagement, on account of a crowning of the tooth flanks of the honing tool, is formed so as to be smaller, only in a working region - located around the apex of the crowning - of an axial dimension (bₖ), than the minimum width required in the machining engagement for covering the toothing width of the workpiece toothing, and the working region is axially displaced until completion of the workpiece toothing machining.

2. The method according to claim 1, wherein the crowning of the honing ring tooth flanks is at least 5 µm, preferably at least 10 µm, in particular at least 15 µm and/or the crowning relative to the honing tool width is at least 0.0002, preferably at least 0.0006, in particular at least 0.001.

3. The method according to claim 1 or 2, wherein the width of the tool toothing exceeds the axial dimension of the working region, in particular on both sides, by at least 20%, preferably at least 25%, in particular 30%, and/or at least 1 mm, preferably at least 2 mm, in particular at least 3 mm.

4. The method according to one of claims 1 to 3, wherein the axial (Z) displacement is superimposed on a radial (X) infeed, and only the working region up to a predetermined radial infeed depth (X_{I}) is used.

5. The method according to one of claims 1 to 4, wherein the predetermined radial infeed depth is not more than 95%, preferably not more than 90%, in particular not more than 80% away from the radial final infeed depth (X_{E}), but preferably more than 20%, more preferably more than 30%, in particular more than 70%, based on the infeed interval from the beginning of material removal to the final infeed depth.

6. The method according to claim 4 or 5, wherein the honing operation is continued beyond the predetermined infeed depth with another honing tool.

7. The method according to claim 6, wherein said other honing tool (10B) and said honing tool (10A) of the first honing operation are clamped in a common clamping device (20).

8. The method according to claim 7, wherein the two honing tools are dressed with an identical dressing tool, in particular the same dressing tool.

9. The method according to claim 8, wherein the tooth flanks of said other honing tool are formed to be concave or with no crowning.

10. The method according to claim 9, wherein the honing operation beyond the predetermined infeed depth continues with the honing tool used in the previous honing operation, but with additional compensating movements generated by the machine axis to widen the contact area beyond that of the previous operation.

11. A control program comprising control instructions, **characterized in that** the control instructions, when executed on a controller of a honing machine, cause the machine to perform a method according to one of claims 1 to 10.

12. A honing machine (200) comprising a rotationally drivable workpiece holder and a rotationally drivable tool holder (20) for receiving a honing tool, and a controller, **characterized in that** the controller is provided with a control program according to claim 11.

13. The honing machine according to claim 12, which, in addition to a linear machine axis (Z) for axially changing the relative position between workpiece and tool, and a linear machine axis (X) for changing the radial relative position of workpiece and tool, as well as a rotary machine axis (A) for adjusting the axis crossing angle of the honing method, also has a further positioning axis.

14. The honing machine according to claim 12 or 13, wherein the tool holder receives two differently profiled honing rings, or one honing ring with differently profiled axial regions, for executing the method with said previous honing operation by the crowned honing tool/profiled region and a subsequent honing operation by the other honing tool/profiled region with the lesser crowing.

## Revendications

1. Procédé de rodage d'une denture sur une pièce d'usinage (2) à l'aide d'un outil de rodage denté (10) en prise d'usinage par engrènement, notamment sous la forme d'une couronne de rodage (10) à denture intérieure ; **caractérisé en ce que**, pour une position relative donnée entre la denture de la pièce et l'outil de rodage, la zone de contact de la prise d'usinage, en raison d'un bombé longitudinal des flancs de dent de l'outil de rodage, est formée de façon à être plus petite, uniquement dans une région de travail d'une dimension axiale (bₖ) située autour du sommet du bombé longitudinal, que la largeur minimale nécessaire pour couvrir la largeur de la denture de la pièce pendant la prise d'usinage, et la région de travail subit un déplacement axiale pour permettre un usinage complet de la denture de la pièce.

2. Procédé selon la revendication 1, dans lequel le bombé longitudinal des flancs de dents de la couronne de rodage est d'au moins 5 µm, de préférence d'au moins 10 µm, notamment d'au moins 15 µm et/ou le bombé longitudinal par rapport à la largeur de l'outil de rodage est d'au moins 0,0002, de préférence d'au moins 0,0006, notamment d'au moins 0,001.

3. Procédé selon la revendication 1 ou 2, dans lequel la largeur de la denture de l'outil est supérieure à la dimension axiale de la région de travail, notamment des deux côtés, d'au moins 20 %, de préférence d'au moins 25 %, et notamment de 30 %, et/ou d'au moins 1 mm, de préférence d'au moins 2 mm, et notamment d'au moins 3 mm.

4. Procédé selon l'une des revendications 1 à 3, dans lequel le déplacement axial (Z) est superposé à une avance radiale (X), et seule la région de travail jusqu'à une profondeur d'avance radiale prédéterminée (X_{I}) est utilisée.

5. Procédé selon l'une des revendications 1 à 4, dans lequel la profondeur d'avance radiale prédéterminée n'est pas à plus de 95 %, de préférence pas à plus de 90 %, notamment pas à plus de 80 % d'écartement de la profondeur d'avance radiale finale (X_{E}), mais de préférence à plus de 20 %, plus préférablement à plus de 30 %, notamment à plus de 70 % par rapport à l'intervalle d'avance, depuis le début de l'enlèvement de matière jusqu'à la profondeur d'avance finale.

6. Procédé selon la revendication 4 ou 5, dans lequel l'opération de rodage est poursuivie au-delà de la profondeur d'avance prédéterminée à l'aide d'un autre outil de rodage.

7. Procédé selon la revendication 6, dans lequel ledit autre outil de rodage (10B) et ledit outil de rodage (10A) de la première opération de rodage sont abloqués dans un dispositif (20) commun.

8. Procédé selon la revendication 7, dans lequel les deux outils de rodage sont dressés avec un outil de dressage identique, notamment un même outil de dressage.

9. Procédé selon la revendication 8, dans lequel les flancs de dents dudit autre outil de rodage sont formés concaves ou sans bombé.

10. Procédé selon la revendication 9, dans lequel l'opération de rodage au-delà de la profondeur d'avance prédéterminée se poursuit à l'aide de l'outil de rodage de l'opération de rodage précédente, mais avec des mouvements de compensation supplémentaires générés par l'axe de la machine pour élargir la zone de contact au-delà de celle de l'opération précédente.

11. Programme de commande comportant des instructions de commande, **caractérisé en ce que** les instructions de commande, lorsqu'elles sont exécutées sur un système de commande d'une machine à roder, amènent la machine à exécuter un procédé selon l'une des revendications 1 à 10.

12. Machine à roder (200) comprenant un dispositif porte-pièce entraîné en rotation et un dispositif porte-outil (20), destiné à recevoir un outil de rodage, entraîné en rotation, ainsi qu'un système de commande, **caractérisée en ce que** le système de commande dispose d'un programme de commande selon la revendication 11.

13. Machine à roder selon la revendication 12, qui, en plus d'un axe machine linéaire (Z) permettant une modification axiale de la position relative entre la pièce et l'outil, d'un axe machine linéaire (X) permettant une modification de la position relative radiale de la pièce et de l'outil, et d'un axe machine rotatif (A) permettant de régler l'angle de croisement des axes du procédé de rodage, comporte également un autre axe de positionnement.

14. Machine à roder selon la revendication 12 ou 13, dans laquelle le porte-outil reçoit deux couronnes de rodage à profils différents, ou une couronne de rodage présentant des régions axiales à profils différents, pour mettre en œuvre le procédé dans lequel l'opération de rodage dite précédente est effectuée par l'outil de rodage à bombé longitudinal/par la région profilée et une opération de rodage suivante est effectuée par l'autre outil de rodage/par la région profilée à moindre bombé longitudinal.
